# EUROPÄISCHE PATENTSCHRIFT

(11) **EP 4 463 914 B1**
(45) Veröffentlichungstag und Bekanntmachung des Hinweises auf die Patenterteilung: **21.10.2026**
(21) Anmeldenummer: 23700287.8
(22) Anmeldetag: 12.01.2023
(51) Int. Cl.: H01Q 15/14, H01Q 19/10, H04B 7/145, H01Q 1/44

(54) **PASSIVER REFLEKTOR ZUM REFLEKTIEREN EINES FUNKSIGNALS**
PASSIVE REFLECTOR FOR REFLECTING A RADIO SIGNAL
RÉFLECTEUR PASSIF POUR RÉFLÉCHIR UN SIGNAL RADIO

(30) Priorität: 13.01.2022 DE 102022100772
(43) Veröffentlichungstag der Anmeldung: 20.11.2024
(73) Patentinhaber: Technische Universität Dortmund, 44227 Dortmund (DE)
(72) Erfinder: WIETFELD, Christian, 44229 Dortmund (DE); BÖCKER, Stefan, 44137 Dortmund (DE)
(74) Vertreter: Michalski Hüttermann & Partner mbB
(86) Internationale Anmeldenummer: PCT/EP2023/050657
(87) Internationale Veröffentlichungsnummer: WO 2023/135221

(56) Entgegenhaltungen:
- WO-A1-2021/030492
- ROMERO-PENA J SAMUEL ET AL: "Irregular MultiFocal Reflector for Efficient mmWave Propagation in Indoor Enviroments", 2020 14TH EUROPEAN CONFERENCE ON ANTENNAS AND PROPAGATION (EUCAP), EURAAP, 15 March 2020 (2020-03-15), pages 1 - 5, XP033789571, DOI: 10.23919/EUCAP48036.2020.9136074
- HEIMANN KARSTEN KARSTEN HEIMANN@TU-DORTMUND DE ET AL: "Modeling and Simulation of Reconfigurable Intelligent Surfaces for Hybrid Aerial and Ground-based Vehicular Communications", PROCEEDINGS OF THE 19TH ACM INTERNATIONAL SYMPOSIUM ON MOBILITY MANAGEMENT AND WIRELESS ACCESS, ACMPUB27, NEW YORK, NY, USA, 22 November 2021 (2021-11-22), pages 67 - 74, XP058775869, ISBN: 978-1-4503-9079-8, DOI: 10.1145/3479239.3485700

## Beschreibung

Die Erfindung betrifft einen passiven Reflektor zum Reflektieren eines Funksignals in einem Funknetz.

Herkömmliche Funknetze, wie beispielsweise Mobilfunknetze, nutzen unter Anderem elektronisch nachführbare Antennen, die mit Hilfe der Beam-Forming-Technik in der Lage sind, die auf der Basis von sogenannten Phased Arrays die Hauptstrahlrichtung einer Antenne dynamisch so auszurichten, dass eine bedarfsgerechte Funkversorgung am Ort eines mobilen Endgeräts erfolgt. Innerhalb eines mit dem Funksignal zu versorgenden Bereichs entstehen auf Grund diverser Störfaktoren, wie beispielsweise hoher Gebäude oder Bäume, häufig schlecht funktechnisch versorgte Bereiche, in denen kein Funksignal oder das Funksignal nur schlecht empfangen werden kann.

Um diese funktechnisch schlecht versorgten Bereiche dennoch zuverlässig abdecken zu können, werden in der Regel zusätzliche Antennen oder Repeater eingesetzt, die das Funksignal empfangen, verstärken und neu aussenden. Diese Herangehensweise hat jedoch den Nachteil, dass die zusätzlichen Bauteile, wie Antennen oder Repeater, eine eigene Stromversorgung benötigen und dadurch die Netzplanung komplexer wird, da auf eine ausreichende Stromversorgung beim Positionieren der Antennen oder Repeater geachtet werden muss. Auf Grund ihrer Größe und optischen Erscheinung lassen sie sich zudem schlecht in ein Stadtbild integrieren, sodass zusätzliche Antennen oder Repeater nicht nur eine komplexere Netzplanung begründen, sondern auch als störend wahrgenommen werden. Nicht selten erheben Anwohner im direkten Umfeld einer geplanten oder bestehenden Antennenanlage eine Beschwerde aus Angst vor gesundheitlichen Beeinträchtigungen wegen der Strahlung oder um ein ansehnliches Stadtbild nicht zu verschlechtern.

Der Artikel "Irregular MulitFocal Reflector for Efficient mmWave Propagation in Indoor Environments" von Romero-Pena J Samuel et al (DOI 10.23919 / EU-CAP48036.2020.9136074 beschreibt passive Reflektoren zum Reflektieren von 5G-Signalen. Für komplexe Innenräume werden Strategien gezeigt, das Problem der Signaldämpfung in dieser Art von komplexen Umgebungen zu entschärfen.

Die WO 2021/030492 A1 beschreibt ein Reflektarray für drahtlose Anwendungen mit Strahlformung und ein Verfahren zum Betrieb passiver Reflektarrays in einer Innenraumumgebung. Das Verfahren umfasst den Empfang eines Hochfrequenzsignals (HF-Signal) von einer Quelle durch eine Vielzahl passiver Reflektorarrays. Das Verfahren umfasst auch das Reflektieren des HF-Signals durch die mehreren passiven Reflektarrays, um mehrere HF-Strahlen zu einem jeweiligen Zielabdeckungsbereich zu erzeugen, wobei jeder der mehreren HF-Strahlen eine Mehrwegverstärkung entlang eines Signalpfads zwischen einem entsprechenden passiven Reflektarray und dem jeweiligen Zielabdeckungsbereich erhöht.

Die aus dem Stand der Technik bekannten Vorrichtungen erlauben es bisher noch nicht, eine Vorrichtung zum Erweitern eines Funknetzes bereitzustellen, das in besonders einfacher Weise in ein Funknetz integriert werden kann.

Davon ausgehend ist es die Aufgabe der Erfindung, eine Vorrichtung zur Reichweitenerhöhung eines Funksignals, insbesondere zur Weiterleitung eines Funksignals über nicht direkte Sichtverbindungen, bereitzustellen, die ohne zusätzliche Stromversorgung funktioniert und in akzeptabler Weise in ein Stadtbild integriert werden kann.

Diese Aufgabe wird durch den Gegenstand des Patentanspruchs 1 gelöst. Bevorzugte Weiterbildungen finden sich in den Unteransprüchen.

Es ist ist somit ein passiver Reflektor zum Reflektieren eines Funksignals vorgesehen, wobei der passive Reflektor als ein flächiges Element mit einer strukturierten Oberfläche ausgestaltet ist, die Oberfläche ein elektrisch leitendes Material aufweist und die Oberfläche derart strukturiert ist, dass die Oberfläche eine Mehrzahl an Reflexionsflächen aufweist, die jeweils das aus einer ersten Richtung einfallende Funksignal in eine zweite zur ersten Richtung unterschiedlichen Richtung reflektieren, wobei die jeweilige zweite Richtung, in die das Funksignal reflektiert wird, für wenigstens zwei Reflexionsflächen verschieden ist.

"Passiv" bedeutet vorliegend, dass das Funksignal nicht aktiv manipuliert wird. Der Reflektor funktioniert also ohne das Funksignal aktiv weiterzuleiten. Dementsprechend umfasst der passive Reflektor keine Bauteile, die eine Energieversorgung benötigen. Er funktioniert ohne Anbindung in ein kabelgebundenes Kommunikations- oder Stromnetz.

"Flächig" bedeutet vorliegend, dass der Reflektor plattenähnlich und im Gegensatz zu einer zylinderförmigen Stabantenne relativ zur Gesamtform des Reflektors große, zumindest annähernd ebene oder nur leicht gekrümmte Oberflächen aufweist.

Ist vorliegend die Rede von einem "elektrisch leitenden Material", ist damit ein Material gemeint, dass eine für die vorliegende Anwendung hinreichend große elektrisch Leitfähigkeit aufweist.

Es ist somit ein maßgeblicher Punkt, dass aufgrund der flächigen elektrisch leitenden Oberfläche der Reflektor das Funksignal reflektieren kann, ohne dass das Funksignal aktiv manipuliert werden muss, so dass keine Bauteile erforderlich sind, die eine Stromversorgung benötigen. Somit können die möglichen Positionen des passiven Reflektors ungeachtet einer Stromversorgung gewählt werden. Der passive Reflektor kann daher besonders einfach installiert und in ein Funknetz integriert werden.

Gemäß einer bevorzugten Weiterbildung der Erfindung umfasst das elektrisch leitende Material eine elektrisch leitende Beschichtung. Die elektrisch leitende Beschichtung ermöglicht es, aus jedem nichtleitenden Material ein für den passiven Reflektor geeignetes Material herzustellen, indem das nichtleitende Material mit einer elektrisch leitenden Beschichtung beaufschlagt wird. Somit kann der Reflektor beispielsweise aus einem kostengünstigen Kunststoff gefertigt und anschließend mit einer elektrisch leitenden Beschichtung beschichtet werden. Vorzugsweise umfasst die elektrisch leitende Beschichtung eine galvanische Beschichtung oder eine Lackierung mit einem elektrisch leitenden Material. Als elektrisch leitender Lack eignet sich insbesondere Lack, der auch zur Verbesserung der Abschirmung von Gehäusen genutzt wird, wie beispielsweise MG Chemicals 841 Super Shield Nickel oder 843AR Super Shield Silver Coated Copper.

Gemäß einer bevorzugten Weiterbildung der Erfindung ist der passive Reflektor einstückig ausgestaltet. "Einstückig" bedeutet vorliegend, dass der passive Reflektor in einem Stück gefertigt ist. Vorzugsweise erfolgt die einstückige Fertigung mittels 3D-Druckverfahren oder im Rahmen des 3D-Gebäude-Druckverfahrens, bei denen Fassadenformen, die als passiver Reflektor Verwendung finden sollen, direkt in den Fassadendruck des Gebäudes integriert werden. Mehrere passive Reflektoren können zum Vergrößern der Fläche zusammengesetzt werden.

Erfindungsgemäß weist die strukturierte Oberfläche eine wabenähnliche Anordnung mehrerer Halbhohlformen auf. "Wabenähnlich" bedeutet vorliegend, dass die einzelnen Halbhohlformen nach Art einer Bienenwabe nebeneinander und vorzugsweise direkt aneinander angrenzend in mehreren Reihen angeordnet sind und dass mehrere Reihen vorzugsweise versetzt zueinander angeordnet sind. Unter "Halbhohlformen" werden insbesondere flexible Flächenformen verstanden, die unterschiedliche Grundflächen aufweisen können und symmetrisch oder asymmetrisch sind. Je nach Anwendungsgebiet und gewünschter Reflexionseigenschaft können die Halbhohlformen Halbhohlkugeln, Halbhohlpyramiden, Halbhohlwürfel oder weitere halbhohlförmige Körper mit unterschiedlichen Grundflächen sein. Die Grundflächen können sich in Länge, Breite und/oder Radius unterscheiden, sodass eine Vielzahl unterschiedlicher Gestaltungsmöglichkeiten der Halbhohlformen kombiniert werden können. Die unterschiedlichen Halbhohlformen sind erfindungsgemäß heterogen verteilt angeordnet

Gemäß einer bevorzugten Weiterbildung der Erfindung weisen die Reflexionsflächen eine in der Verwendung dem Erdboden zugewandte reflektierende Seite und eine in der Verwendung dem Erdboden abgewandte nicht reflektierende Seite auf. Die Oberfläche weist folglich mehrere Reflexionsflächen auf, die von der Oberfläche zumindest teilweise hervorstehen und bei einer vertikalen Anordnung des passiven Reflektors jeweils eine Seite aufweisen, die nach oben, also vom Erdboden weg, zeigt und jeweils eine Seite aufweisen, die nach unten, also zum Erdboden hin, zeigt. Die zum Erdboden zugewandte Seite wird dann von der elektrisch nachführbaren Antenne zum Reflektieren des Funksignals gezielt angesteuert, während die dem Erdboden abgewandte Seite für andere Zwecke gestaltet werden kann. Gemäß einer bevorzugten Weiterbildung der Erfindung weist die in der Verwendung dem Erdboden abgewandte nicht reflektierende Seite Photovoltaikelemente und/oder bepflanzte Elemente auf. Auf diese Weise können die nicht zur Reflektion genutzten Flächen für eine Zusatzfunktion verwendet werden. Vor allem in stark bebauten Stadtgebieten, in denen viele funktechnisch unzureichend abgedeckte Bereiche liegen, können die nicht reflektierenden Flächen des passiven Reflektors für urbane vertikale Gärten oder zur Gewinnung erneuerbarer Energie verwendet werden.

Gemäß einer bevorzugten Weiterbildung der Erfindung umfasst das flächige Element ein wärmedämmendes Material. Mit einem wärmedämmenden Material wird erreicht, dass der passive Reflektor eine weitere Zusatzfunktion übernehmen kann. Somit kann der passive Reflektor für die Fläche, an der er angeordnet ist, als Schutz vor Wärmeverlust dienen.

Erfindungsgemäß ist die Verwendung eines oben beschriebenen passiven Reflektors zur Erweiterung der Abdeckung eines Funknetzes vorgesehen. Die passiven Reflektoren werden in ein Funknetz integriert und können von einer Basisantenne oder Basisstation gezielt angesteuert werden. Das Funksignal wird dann in einen Bereich, der funktechnisch unzureichend abgedeckt ist, reflektiert, sodass das Funknetz in diesen Bereich erweitert wird.

Ferner ist erfindungsgemäß die Verwendung eines oben beschriebenen passiven Reflektors als ein Fassadenelement zur Verkleidung eines Gebäudes vorgesehen. Der passive Reflektor kann als Fassadenelement derart gestaltet werden, dass er immersiv in die Umgebung integriert werden kann. Wird ein Gebäude mit den passiven Reflektoren verkleidet, entsteht eine Möglichkeit, das Funknetz zu erweitern und trotzdem unauffällige und als nicht störend empfundene Bauteile zu verwenden. Die passiven Reflektoren lassen sich unauffällig in ein Stadtbild integrieren.

Erfindungsgemäß ist ein Verfahren zum Herstellen eines oben beschriebenen passiven Reflektors für ein Funknetz vorgesehen, mit folgenden Verfahrensschritten:
Bestimmen einer Funknetzabdeckung eines von einer nachführbaren Antenne gesendeten Funksignals basierend auf einem Modell eines mit dem Funksignal zu versorgenden Bereichs,
Ermitteln wenigstens eines Teilbereichs in dem Modell des zu versorgenden Bereichs, in dem das gesendete Funksignal nicht empfangen werden kann,
Ermitteln einer Position des passiven Reflektors in dem Modell des zu versorgenden Bereichs, wobei die Position derart gewählt wird, dass die nachführbare Antenne den passiven Reflektor gezielt ansteuern und der passive Reflektor das von der nachführbaren Antenne gesendete Funksignal reflektieren kann,
Ermitteln einer Oberflächenstruktur des passiven Reflektors, wobei die Oberflächenstruktur derart gewählt wird, dass das von der nachführbaren Antenne gesendete Funksignal in den ermittelten Teilbereich reflektiert wird,
Anfertigen des passiven Reflektors basierend auf der ermittelten Oberflächenstruktur und
Installieren des passiven Reflektors in dem zu versorgenden Bereich basierend auf der ermittelten Position.

Die konventionelle Netzplanung sieht vor, dass ein dreidimensionales Modell eines mit einem Funksignal zu versorgenden Bereichs erstellt wird. Das dreidimensionale Modell umfasst vor allem umliegende Gebäude und deren Außenstrukturen sowie Bäume. Unter Berücksichtigung vorgegebener Versorgungsziele und potenzieller Standorte für die Basisantenne und der Antenneneigenschaften wird die Funknetzausbreitung mittels Netzplanungsalgorithmus in dem zu versorgenden Bereich modelliert. Es entsteht ein digitales Modell der Funknetzabdeckung ohne passive Reflektoren. Auf Basis des digitalen Modells werden nun potenzielle Positionen des passiven Reflektors sowie eine optimale Oberflächenstruktur ermittelt, die es ermöglichen, das Funksignal in die Teilbereiche mit einer unzureichenden Funksignalabdeckung zu reflektieren. Im dreidimensionalen digitalen Modell kann der Einfluss der passiven Reflektoren auf das Funknetz modelliert werden. Bei zufriedenstellendem Ergebnis wird der passive Reflektor gemäß den ermittelten Eigenschaften angefertigt und an der entsprechenden Position installiert.

Das Anfertigen des passiven Reflektors umfasst insbesondere das Anfertigen des flächigen Basiselements mit einer strukturierten Oberfläche, beispielsweise im 3D-Druckverfahren, und das anschließende Beschichten oder Lackieren der Oberfläche.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: schematisch einen zu versorgenden Bereich mit einem passiven Reflektor gemäß einem bevorzugten Ausführungsbeispiel der Erfindung,
- Fig. 2: schematisch einen passiven Reflektor gemäß einem bevorzugten Ausführungsbeispiel der Erfindung in einer perspektivischen Ansicht,
- Fig. 3: schematisch einen passiven Reflektor gemäß einem bevorzugten Ausführungsbeispiel der Erfindung in einer Schnittansicht,
- Fig. 4: schematisch ein Verfahren zum Herstellen eines passiven Reflektors gemäß einem bevorzugten Ausführungsbeispiel der Erfindung.

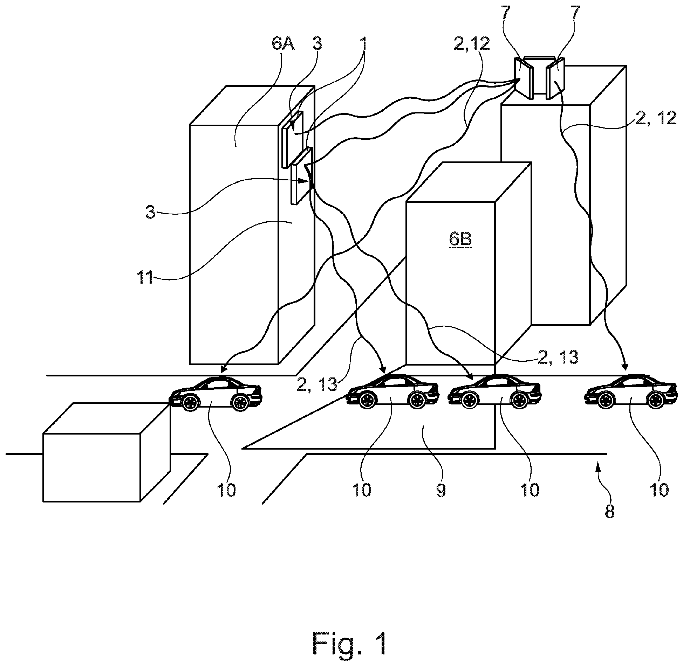

Aus Fig. 1 ist schematisch ein zu versorgender Bereich 8 mit einem passiven Reflektor 1 ersichtlich. Der zu versorgende Bereich 8 umfasst eine nachführbare Antenne 7, die ein Funksignal 2 aussendet. Im Schatten des Gebäudes 6B entsteht ein Teilbereich 9, in dem das Funksignal 2 von den mobilen Empfängern 10 nur schlecht oder gar nicht empfangen werden kann. Damit das Funksignal 2 dennoch empfangen werden kann, sind an einer Fassade 11 eines benachbarten Gebäudes 6A zwei passive Reflektoren 1 angeordnet. Das Funksignal 2 wird gezielt auf die passiven Reflektoren 1 ausgesendet und in den Teilbereich 9 reflektiert, ohne dass es aktiv manipuliert wird. Außerhalb des Teilbereichs 9 wird das Funksignal 2 über eine direkte Verbindung 12 zwischen Antenne 7 und mobilen Empfänger 10 empfangen. Innerhalb des Teilbereichs 9 wird das Funksignal 2 über die Verbindung zwischen Antenne 7 und mobilem Endgerät 10 über die Reflexion am passiven Reflektor 13 von den mobilen Empfängern 10 empfangen. Die Position des passiven Reflektors 1 sowie die Oberfläche 3 des passiven Reflektors 1 werden derart gewählt, dass das Funksignal 2 in den Teilbereich 9 reflektiert wird. Der passive Reflektor 1 wird als Fassadenelement zur Verkleidung der Fassade 11 des Gebäudes 6A verwendet. Er wird in Abstimmung des Stadtbildes gestaltet, sodass er immersiv in ein Stadtbild integriert werden kann.

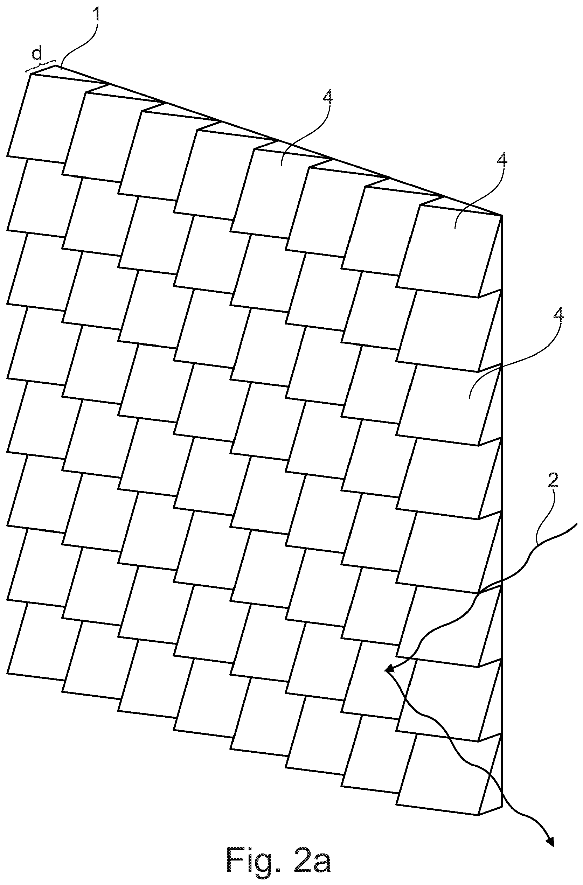

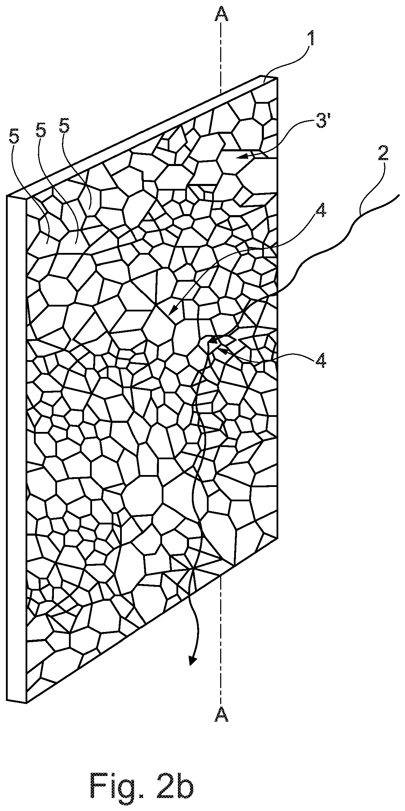

Fig. 2 zeigt einen passiven Reflektor 1 in einer perspektivischen Ansicht. Der passive Reflektor 1 hat eine strukturierte Oberfläche 3'. Die Struktur entsteht durch eine Aneinanderreihung mehrerer Halbhohlformen 5. In diesem konkreten Ausführungsbeispiel sind die Halbhohlformen 5 heterogen verteilt. Das bedeutet, dass die Halbhohlformen 5 unterschiedliche Grundflächen haben. Sie können eckig oder rund sein und sind in keinem regelmäßigen Muster angeordnet. Die strukturierte Oberfläche 3' weist eine Mehrzahl von Reflexionsflächen 4 auf, an denen das Funksignal 2 reflektiert wird. Das Funksignal 2 wird dabei in eine andere Richtung reflektiert als es einfällt. Die strukturierte Oberfläche 3' ist elektrisch leitend. Die elektrische Leitfähigkeit entsteht entweder durch die Wahl eines elektrisch leitenden Materials, aus dem der passive Reflektor 1 hergestellt wird oder durch die Beschichtung eines nicht elektrisch leitenden Materials mit einer elektrisch leitenden Beschichtung.

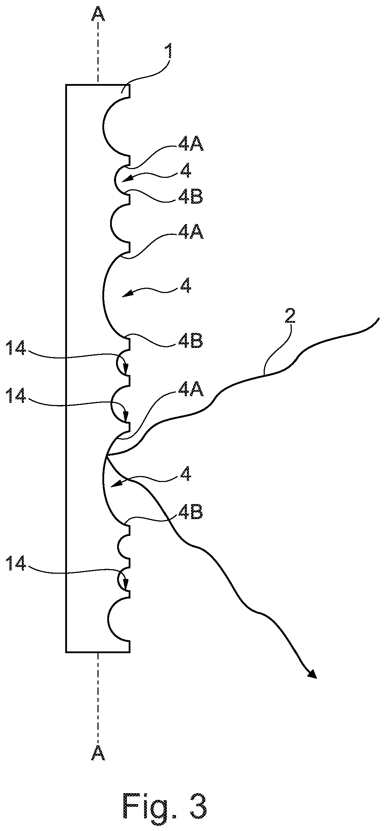

Fig. 3 zeigt einen passiven Reflektor 1 in einer Schnittansicht entlang der Schnittachse A-A eine ähnlichen passiven Reflektors 1 aus Fig. 2. In der Schnittansicht sind die Reflexionsflächen 4 erkennbar. Die Reflexionsflächen 4 weisen zwei Seiten auf. Eine Seite 4A ist reflektierend und in der vertikalen Anordnung des Reflektors 1 dem Erdboden zugewandt. Die andere Seite 4B ist nicht reflektierend und in der vertikalen Anordnung des Reflektors 1 dem Erdboden abgewandt. Der passive Reflektor 1 wird in dem zu versorgenden Bereich 8 derart positioniert, dass das Funksignal 2 auf die reflektierende Seite 4A trifft und reflektiert wird. Die dementsprechend zur Reflexion nicht genutzte nicht reflektierende Seite 4B wird zu anderen Zwecken verwendet. Durch das Anordnung von Photovoltaikelementen oder von bepflanzten Elementen 14 kann die zur Reflexion ungenutzte Fläche sinnvoll zur Energiegewinnung oder zum Bereitstellen urbaner Gärten verwendet werden.

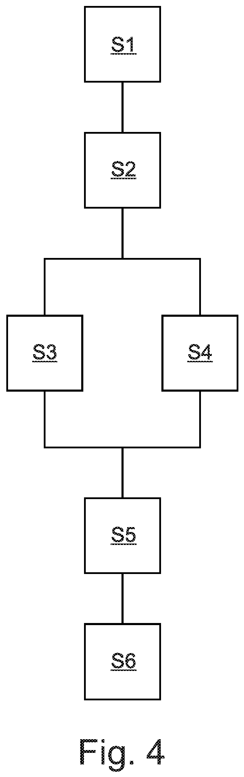

Fig. 4 zeigt ein Verfahren zum Herstellen eines passiven Reflektors 1 gemäß einem bevorzugten Ausführungsbeispiel der Erfindung. In einem ersten Schritt S1 wird die Funknetzabdeckung eines von einer nachführbaren Antenne 7 gesendeten Funksignals 2 bestimmt. Die Bestimmung der Funknetzabdeckung basiert auf einem Modell des zu versorgenden Bereichs 8. Die Funkausbreitung wird modelliert, sodass in einem nächsten Schritt S2 Teilbereiche 9 bestimmt werden können, in denen das Funksignal 2 schlecht oder gar nicht empfangen werden kann.

Ausgehend von dem Modell und der ermittelten Teilbereiche 9 wird eine mögliche Position des passiven Reflektors 1 in dem Modell und eine davon abhängige Oberflächenstruktur 3' ermittelt S3, S4.

Basierend auf der ermittelten Position und der Oberflächenstruktur 3' wird der passive Reflektor 1 angefertigt S5 und in der realen Umgebung installiert S6.

### Bezugszeichenliste

- 1: Passiver Reflektor
- 2: Funksignal
- 3: Oberfläche
- 3': Oberflächenstruktur
- 4: Reflexionsflächen
- 4A: dem Erdboden zugewandte reflektierende Seite
- 4B: dem Erdboden abgewandte nicht reflektierende Seite
- 5: Halbhohlform
- 6A: Gebäude
- 6B: Gebäude
- 7: nachführbare Antenne
- 8: zu versorgender Bereich
- 9: Teilbereich mit unzureichender Abdeckung
- 10: mobiler Empfänger
- 11: Gebäudefassade
- 12: direkte Funksignal Verbindung
- 13: Funksignal Verbindung über passiven Reflektor
- 14: bepflanzte Elemente
- A - A: Schnittachse
- S1: Bestimmen einer Funknetzabdeckung
- S2: Ermitteln wenigstens eines Teilbereichs, in dem das gesendete Funksignal nicht empfangen werden kann
- S3: Ermitteln einer Position des passiven Reflektors
- S4: Ermitteln einer Oberflächenstruktur des passiven Reflektors
- S5: Anfertigen des passiven Reflektors
- S6: Installieren des passiven Reflektors

## Patentansprüche

1. Passiver Reflektor (1) zum Reflektieren eines Funksignals (2), wobei
der passive Reflektor (1) als ein flächiges Element mit einer strukturierten Oberfläche (3) ausgestaltet ist,
die Oberfläche (3) ein elektrisch leitendes Material aufweist, und
die Oberfläche (3) derart strukturiert ist, dass die Oberfläche eine Mehrzahl an Reflexionsflächen (4) aufweist, die jeweils das aus einer ersten Richtung einfallende Funksignal (2) in eine zweite zur ersten Richtung unterschiedlichen Richtung reflektieren, wobei die jeweilige zweite Richtung, in die das Funksignal reflektiert wird, für wenigstens zwei Reflexionsflächen (4) verschieden ist, wobei
die strukturierte Oberfläche (3) eine wabenähnliche Anordnung mehrerer Halbhohlformen (5) mit unterschiedlichen Grundflächen aufweist und
**dadurch gekennzeichnet ist, dass**
die Halbhohlformen (5) heterogen verteilt angeordnet sind.

2. Passiver Reflektor (1) nach Anspruch 1, wobei das elektrisch leitende Material eine elektrisch leitende Beschichtung umfasst.

3. Passiver Reflektor (1) nach einem der Ansprüche 1 oder 2, wobei der passive Reflektor (1) einstückig ausgestaltet ist.

4. Passiver Reflektor (1) nach einem der vorherigen Ansprüche, wobei die Reflexionsflächen (4) eine in der Verwendung dem Erdboden zugewandte reflektierende Seite (4A) und eine in der Verwendung dem Erdboden abgewandte nicht reflektierende Seite (4B) aufweisen.

5. Passiver Reflektor (1) nach einem der vorherigen Ansprüche, wobei die in der Verwendung dem Erdboden abgewandte nicht reflektierende Seite (4B) Photovoltaikelemente und/oder bepflanzte Elemente (14) aufweist.

6. Passiver Reflektor (1) nach einem der vorherigen Ansprüche, wobei das flächige Element ein wärmedämmendes Material umfasst.

7. Verwendung eines passiven Reflektors (1) nach einem der Ansprüche 1 bis 6 zur Erweiterung der Abdeckung eines Funknetzes.

8. Verwendung eines passiven Reflektors (1) nach einem der Ansprüche 1 bis 6 als ein Fassadenelement zur Verkleidung eines Gebäudes (6A).

9. Verfahren zum Herstellen eines passiven Reflektors (1) nach einem der Ansprüche 1 bis 6 für ein Funknetz, mit folgenden Verfahrensschritten:
Bestimmen einer Funknetzabdeckung eines von einer nachführbaren Antenne (7) gesendeten Funksignals (2) basierend auf einem Modell eines mit dem Funksignal (2) zu versorgenden Bereichs (8),
Ermitteln wenigstens eines Teilbereichs (9) in dem Modell des zu versorgenden Bereichs (8), in dem das gesendete Funksignal (2) nicht empfangen werden kann,
Ermitteln einer Position des passiven Reflektors (1) in dem Modell des zu versorgenden Bereichs (8), wobei die Position derart gewählt wird, dass die nachführbare Antenne (7) den passiven Reflektor (1) gezielt ansteuern und der passive Reflektor (1) das von der nachführbaren Antenne (7) gesendete Funksignal (2) reflektieren kann,
Ermitteln einer Oberflächenstruktur (3') des passiven Reflektors (1), wobei die Oberflächenstruktur (3') derart gewählt wird, dass das von der nachführbaren Antenne (7) gesendete Funksignal (2) in den ermittelten Teilbereich (9) reflektiert wird,
Anfertigen des passiven Reflektors (1) basierend auf der ermittelten Oberflächenstruktur (3'), und
Installieren des passiven Reflektors (1) in dem zu versorgenden Bereich (8) basierend auf der ermittelten Position.

## Claims

1. A passive reflector (1) for reflecting a radio signal (2), wherein
the passive reflector (1) is configured as a planar element having a structured surface (3),
the surface (3) comprises an electrically conductive material, and
the surface (3) is structured such that the surface comprises a plurality of reflective areas (4), each of which reflects the radio signal (2) incident from a first direction into a second direction different from the first direction, wherein the respective second direction into which the radio signal (2) is reflected differs for at least two reflective areas (4), wherein
the structured surface (3) comprises a honeycomb-like arrangement of a plurality of semi-hollow shapes (5) having different base surfaces, **characterised in that**
the semi-hollow shapes (5) are arranged in a heterogeneous distribution.

2. The passive reflector (1) according to claim 1, wherein the electrically conductive material comprises an electrically conductive coating.

3. The passive reflector (1) according to claim 1 or 2, wherein the passive reflector (1) is formed in one piece.

4. The passive reflector (1) according to any one of the preceding claims, wherein the reflective areas (4) have a reflective side (4A) facing the ground during use and a non-reflective side (4B) facing away from the ground during use.

5. The passive reflector (1) according to any one of the preceding claims, wherein the non-reflective side (4B) facing away from the ground during use comprises photovoltaic elements and/or planted elements (14).

6. The passive reflector (1) according to any one of the preceding claims, wherein the planar element comprises a heat-insulating material.

7. Use of a passive reflector (1) according to any one of claims 1 to 6 for extending the coverage of a radio network.

8. Use of a passive reflector (1) according to any one of claims 1 to 6 as a façade element for cladding a building (6A).

9. A method for manufacturing a passive reflector (1) according to any one of claims 1 to 6 for a radio network, comprising the following steps:
determining radio-network coverage provided by a radio signal (2) transmitted by a steerable antenna (7), based on a model of an area (8) to be served by the radio signal (2),
identifying at least one sub-area (9) within the model of the area (8) to be served in which the transmitted radio signal (2) cannot be received,
determining a position of the passive reflector (1) within the model of the area (8) to be served, wherein the position is selected such that the steerable antenna (7) can be specifically directed towards the passive reflector (1) and the passive reflector (1) can reflect the radio signal (2) transmitted by the steerable antenna (7),
determining a surface structure (3') of the passive reflector (1), wherein the surface structure (3') is selected such that the radio signal (2) transmitted by the steerable antenna (7) is reflected into the determined sub-area (9),
manufacturing the passive reflector (1) based on the determined surface structure (3'), and
installing the passive reflector (1) in the area (8) to be served based on the determined position.

## Revendications

1. Réflecteur passif (1) pour réfléchir un signal radio (2), dans lequel
le réflecteur passif (1) est conçu comme un élément plan doté d'une surface structurée (3).
la surface (3) comprend un matériau électriquement conducteur, et
la surface (3) est structurée de telle sorte qu'elle comprend une pluralité de zones réfléchissantes (4), dont chacune réfléchit le signal radio (2) incident provenant d'une première direction vers une deuxième direction différente depuis la première direction, dans lequel la deuxième direction respective dans laquelle le signal radio (2) est réfléchi est différente pour au moins deux zones réfléchissantes (4), dans lequel
la surface structurée (3) comprend un agencement en nid d'abeilles constitué d'une pluralité de formes semi-creuses (5) ayant différentes surfaces de base, **caractérisée en ce que**
les formes semi-creuses (5) sont disposées selon une distribution hétérogène.

2. Réflecteur passif (1) selon la revendication 1, dans lequel le matériau électriquement conducteur comprend un revêtement électriquement conducteur.

3. Réflecteur passif (1) selon la revendication 1 ou 2, dans lequel le réflecteur passif (1) est formé en une seule pièce.

4. Réflecteur passif (1) selon l'une quelconque des revendications précédentes, dans lequel les zones réfléchissantes (4) présentent un côté réfléchissant (4A) orienté vers le sol pendant l'utilisation et un côté non réfléchissant (4B) orienté à l'opposé du sol pendant l'utilisation.

5. Réflecteur passif (1) selon l'une quelconque des revendications précédentes, dans lequel le côté non réfléchissant (4B) orienté à l'opposé du sol pendant l'utilisation comprend des éléments photovoltaïques et/ou des éléments plantés (14).

6. Réflecteur passif (1) selon l'une quelconque des revendications précédentes, dans lequel l'élément plan comprend un matériau isolant thermique.

7. Utilisation d'un réflecteur passif (1) selon l'une quelconque des revendications 1 à 6 pour étendre la couverture d'un réseau radio.

8. Utilisation d'un réflecteur passif (1) selon l'une quelconque des revendications 1 à 6 comme élément de façade pour habiller un bâtiment (6A).

9. Procédé de fabrication d'un réflecteur passif (1) selon l'une quelconque des revendications 1 à 6 pour un réseau radio, comprenant les étapes suivantes:
la détermination de la couverture du réseau radio fournie par un signal radio (2) émis par une antenne orientable (7), sur la base d'un modèle d'une zone (8) à desservir par le signal radio (2),
l'identification d'au moins une sous-zone (9) dans le modèle de la zone (8) à desservir dans laquelle le signal radio émis (2) ne peut pas être reçu,
la détermination d'une position du réflecteur passif (1) dans le modèle de la zone (8) à desservir, dans laquelle la position est choisie de telle sorte que l'antenne orientable (7) puisse être dirigée de manière spécifique vers le réflecteur passif (1) et que le réflecteur passif (1) puisse réfléchir le signal radio (2) émis par l'antenne orientable (7),
la détermination d'une structure de surface (3') du réflecteur passif (1), dans lequel la structure de surface (3') est choisie de telle sorte que le signal radio (2) émis par l'antenne orientable (7) soit réfléchi dans la sous-zone déterminée (9),
la fabrication du réflecteur passif (1) sur la base de la structure de surface déterminée (3'), et
l'installation du réflecteur passif (1) dans la zone (8) à desservir en fonction de la position déterminée.
